# EUROPÄISCHE PATENTSCHRIFT

(11) **EP 0 826 562 B1**
(45) Veröffentlichungstag und Bekanntmachung des Hinweises auf die Patenterteilung: **09.10.2002**
(21) Anmeldenummer: 97112519.0
(22) Anmeldetag: 22.07.1997
(51) Int. Cl.: B60R 21/20

(54) **Gassack-Rückhaltesystem mit selbstschneidenden Befestigungsmitteln**
Airbag restraining device with self-tapping fastening means
Dispositif de retenue à coussin gonflable avec éléments de fixation autotaraudeurs

(30) Priorität: 26.08.1996 DE 29614832 U
(43) Veröffentlichungstag der Anmeldung: 04.03.1998
(73) Patentinhaber: TRW Occupant Restraint Systems GmbH & Co. KG, 73551 Alfdorf (DE)
(72) Erfinder: Berger, Jürgen, 73557 Mutlangen (DE)
(74) Vertreter: Kitzhofer, Thomas, Dipl.-Ing.

(56) Entgegenhaltungen:
- WO-A-92/21534
- US-A- 5 484 165
- US-A- 5 496 058
- US-A- 5 496 059
- PATENT ABSTRACTS OF JAPAN vol. 014, no. 367 (M-1008), 9.August 1990 & JP 02 133263 A (NIPPON PLAST CO LTD), 22.Mai 1990,

## Beschreibung

Die Erfindung betrifft ein Befestigungsmittel bei einem mit einem Gassack ausgestatteten Fahrzeuginsassen-Rückhaltesystem nach dem, in diesem technischen Gebiet allgemein bekannten Oberbegriff des Anspruchs 1. Die Erfindung betrifft ferner ein Befestigungsmittel nach dem, in diesem technischen Gebiet ebenfalls allgemein bekannten Oberbegriff des Anspruchs 4.

Bislang werden Gassäcke an Gasgeneratoren oder Gassackmodule an einem Fahrzeug unter anderem durch Schrauben-Muttemverbindungen befestigt, wobei auch Gewindebolzen verwendet werden. Diese sind zum Beispiel an einem rahmenförmigen Halteteil angeformt, das den Gassack im Bereich des Gassackmundes abdichtend gegen einen Gasgenerator preßt, wodurch der Gassack am Gasgenerator befestigt wird. Die Mutter wird nach dem Aufschrauben zu ihrer Sicherung auf dem Gewindebolzen durch Mikroverkapselung festgeklebt.

Während des Aufschraubens abgeriebene Klebstoffreste können jedoch Teile einer Montageeinrichtung miteinander verkleben oder die Montageeinrichtung sowie sichtbare Fahrzeugteile verschmutzen. Deshalb muß mit dem Klebstoff sehr sorgsam umgegangen werden, was die Montagezeit jedoch erhöht.

Die Erfindung schafft ein kostengünstiges Befestigungsmittel bei einem Fahrzeug-Rückhaltesystem, das durch bereits bestehende Einrichtungen montiert und durch das die Montagezeit verringert werden kann. Dies wird bei einem Befestigungsmittel der eingangs genannten Art erfindungsgemäß durch die Merkmale des Anspruchs 1 gelöst. Die Aufgabe wird auch durch die Merkmale des Anspruchs 4 gelöst. Weist die Mutter ein selbstschneidendes Gewinde auf, schneidet dieses ein Gewinde in den gewindelosen Bolzen. Bei einem selbstfurchenden Gewinde, z.B. in Form eines trilobularen Gewindes, verformt dieses das vorhandene Gewinde des Gegenstücks nur elastisch. Durch das elastische Verformen wird eine Sicherung der Mutter gegen selbsttätiges Lösen geschaffen.

In einer vorteilhaften Weiterbildung durch die Merkmale der Ansprüche 8 oder 9 schafft die Erfindung ein einfach zusammenzubauendes Fahrzeuginsassen-Rückhaltesystem, dessen Gassack-Modul sehr einfach und schnell am Fahrzeug befestigt werden kann.

Trilobulare Gewinde, die ein vorhandenes Gewinde einer Mutter elastisch verformen, haben vorzugsweise Gewindeflanken, die nach außen hin spitz zulaufen, wobei sich die entstehende Spitze in den Gewindegrund des Muttemgewindes drückt.

Die Mutter muß durch das erfindungsgemäße Befestigungsmittel nicht mehr mit dem Bolzen verklebt werden und sitzt im Gegensatz zu bislang üblichen Schrauben-Muttemverbindungen aufgrund höherer Reibung gesichert und ohne Spiel auf dem Außengewinde des Befestigungsteils. Bislang bestehende Montagekonzepte können damit weiterverwendet werden, ohne daß es einer Neukonstruktion von Teilen des Fahrzeuginsassen-Rückhaltesystems bedarf.

Die Mutter kann gemäß bevorzugter Ausführungsformen ein Stanz- oder Spritzteil sein oder durch einen Kaltpreßvorgang geformt sein.

Der Bolzen wird vorzugsweise an dem Halteteil durch Einpressen oder Anformen fixiert.

Weitere Merkmale und Vorteile der Erfindung ergeben sich aus den nachfolgenden Zeichnungen, auf die Bezug genommen wird. In den Zeichnungen zeigen:
Figur 1 ein Befestigungsmittel, mit einem Gewindebolzen und einer gewindelosen Mutter zum Befestigen eines Gassacks an einem Gasgenerator,
Figur 2 eine Ausführungsform des erfindungsgemäßen Befestigungsmittels, mit einem Gewindebolzen mit selbstfurchendem Gewinde und einer Mutter mitmetrischem Gewinde und
Figur 3 ein Fahrzeuginsassen-Rückhaltesystem mit einem erfindungsgemäßen Befestigungsmittel.

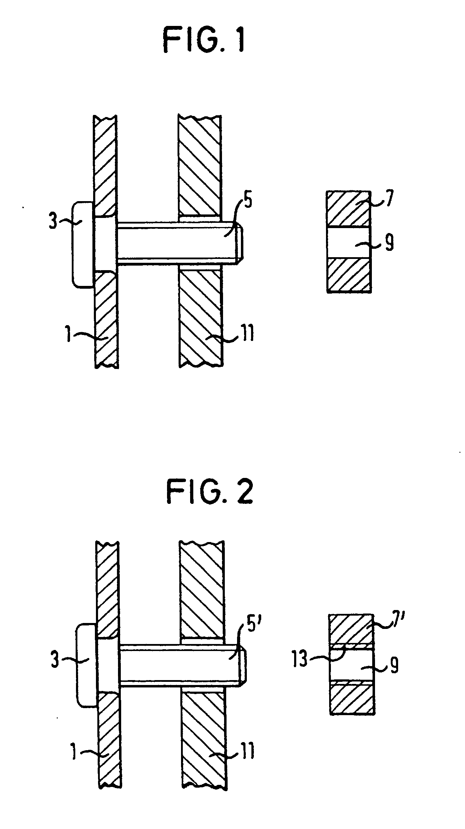

In Figur 1 ist ein bekanntes Befestigungsmittel mit einem rahmenförmigen Halteteil 1 gezeigt, das mehrere Öffnungen aufweist, in die Gewindebolzen 3 eingepreßt sind, von denen nur einer gezeigt ist. Der so drehfest mit dem Halteteil 1 verbundene Gewindebolzen 3 weist einen Abschnitt mit einem selbstschneidenden Außengewinde 5 auf. Eine als Stanzteil ausgeführte Mutter 7 bildet das Gegenstück zum Gewindebolzen 3. Eine Öffnung 9 in der Mutter 7, die kein Gewinde aufweist, ist in ihrem Innendurchmesser so auf den Außendurchmesser des selbstschneidenden Gewindes 5 abgestimmt, daß die Mutter 7 auf das Außengewinde 5 aufgedreht werden kann und dabei in die Innenwand der Öffnung 9 ein Gewinde geschnitten wird. Das Halteteil 1, das in seiner Form dem Einblasmund eines Gassacks angepaßt ist, der Gewindebolzen 3 und die Mutter 7 bilden ein Befestigungsmittel für den nicht gezeigten Gassack als Teil eines Fahrzeuginsassen-Rückhaltesystems. Der Gassack wird im Bereich seines Gassackmundes durch das Befestigungsmittel gasdicht an einer Ausströmöffnung eines Gasgenerators befestigt. Die Ausströmöffnung des Gasgenerators umgibt ein am Gasgenerator angeformter Flansch 11.

Zum Befestigen des Gassacks wird dieser im Bereich des Gassackmundes auf den Flansch 11 und das Halteteil 1 wiederum auf den Gassack im Bereich des Gassackmundes gelegt. Die Gewindebolzen 3 erstrecken sich durch entsprechende Öffnungen im Gassack und im Flansch 11 hindurch. Die Mutter 7 wird auf den Gewindebolzen 3 gedreht, so daß in der Innenwand der Öffnung 9 ein Innengewinde geschnitten wird. Das Halteteil 1 preßt schließlich den Gassack im Bereich des Gassackmundes so gegen den Flansch 11, daß eine gasdichte Befestigung des Gassacks erreicht wird.

Gegenüber dem in Figur 1 dargestellten Befestigungsmittel unterscheidet sich das erfindungsgemäße Befestigungsmittel dadurch, daß der Bolzen 3 gewindelos gestaltet und die Mutter 7 das selbstschneidende Gewinde aufweist.

Eine Mutternsicherung durch Verkleben der Mutter 7 mit dem Gewindebolzen 3 ist nicht erforderlich, da zwischen dem Außengewinde 5 und dem geschnittenen Innengewinde eine erhöhte Reibung auftritt, die ein Lockern der Mutter 7 verhindert.

Die Montage des Gassacks kann auch durch eine Montageeinrichtung halboder vollautomatisiert erfolgen, wobei bislang übliche Montageeinrichtungen, bei denen Muttern mit Innengewinde auf einen Gewindebolzen aufgeschraubt werden, weiterverwendet werden können, ohne daß erhebliche Umbauten erforderlich wären.

Darüber hinaus ist es auch möglich, ein gesamtes Gassackmodul durch Gewindebolzen mit selbstschneidenden Außengewinden und Gegenstücken in Form von Muttern ohne Gewinde an einem Fahrzeugteil, zum Beispiel einer Lenkradnabe, zu befestigen.

Die in Figur 2 gezeigte Ausführungsform unterscheidet sich von dem anhand von Figur 1 beschriebenen Befestigungsmittel dadurch, daß der Gewindebolzen 3 mit einem selbstfurchenden Gewinde 5' in Form eines trilobularen Gewindes versehen ist. Die Mutter 7' umfaßt ein metrisches Innengewinde 13. Das Gewinde 5' formt beim Aufschrauben der Mutter 7' das Gewinde 13 plastisch um oder verformt es lediglich elastisch, abhängig von den Abmessungen der Gewinde 5' und 13 zueinander. Durch die gegenüber herkömmlichen Gewindepaarungen höhere Kraft zum Aufschrauben der Mutter 7' wird auch ein erhöhtes Lösemoment erzeugt, das dafür sorgt, daß die Mutter 7' gegen selbsttätiges Lockern gesichert ist. Wenn das Gewinde 13 nur elastisch verformt wird, kann die Mutter 7' wieder gelöst und danach erneut auf das Gewinde 5' aufgeschraubt werden, ohne daß die Sicherungswirkung entfällt.

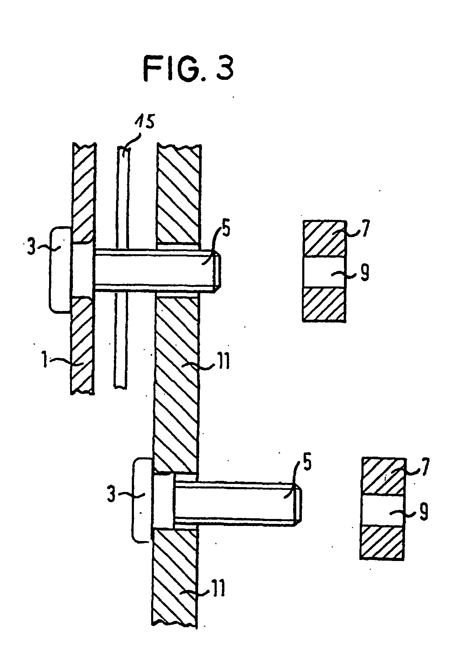

In Figur 3 ist ein Fahrzeuginsassen-Rückhaltesystem gezeigt, das ein Gassack-Modul mit einem Gassack 15, einem Gasgenerator mit einem Flansch 11 und einem Befestigungsmittel zum Befestigen des Gassack-Moduls am Fahrzeug aufweist. Das Befestigungsmittel umfaßt einen Bolzen 3, der drehfest am Flansch 11 angebracht ist und eine darauf aufschraubbare Mutter 7. Ferner ist das Halteteil 1 vorgesehen, das innerhalb des Gassacks 15 angeordnet ist und zur Befestigung des Gassacks 15 am Flansch 11 des Gasgenerator dient. Auch dieses Halteteil ist wie der Flansch 11 mit Bolzen 3 versehen, die Teil eines weiteren Befestigungsmittels sind, die wie das zuvor erwähnte Befestigungsmittel aufgebaut ist. Die Bolzen 3 oder die Muttern 7 umfassen ein selbstschneidendes oder selbstfurchendes Gewinde 5, zum Schneiden, Formen oder elastischen Verformen eines Gewindes in das oder in dem Gegenstück, so daß die Muttern nach dem Aufschrauben gegen. Verdrehen gesichert sind.

## Patentansprüche

1. Befestigungsmittel bei einem mit einem Gassack ausgestatteten Fahrzeuginsassen-Rückhaltesystem, mit einem Bolzen (3), der drehfest mit einem Halteteil (1) verbunden ist, und einer darauf aufschraubbaren Mutter (7; 7'), **dadurch gekennzeichnet, daß** die Mutter (7; 7') ein selbstschneidendes oder selbstfurchendes Gewinde (5; 5') zum Schneiden, Formen oder elastischen Verformen eines Gewindes in dem Bolzen (3) aufweist, so daß die Mutter (7; 7') nach dem Aufschrauben gegen Verdrehen gesichert ist, wobei der Bolzen vor dem Aufschrauben der Mutter (7; 7') gewindelos ist.

2. Befestigungsmittel nach Anspruch 1, **dadurch gekennzeichnet, daß** der Bolzen (3) durch Einpressen oder Anformen an dem Halteteil (1) fixiert ist.

3. Befestigungsmittel nach einem der vorstehenden Ansprüche, **dadurch gekennzeichnet, daß** der Bolzen (3) an einem ringförmigen, den Einblasmund eines Gassacks umgebenden Halteteil (1) fixiert ist.

4. Befestigungsmittel bei einem mit einem Gassack ausgestatteten Fahrzeuginsassen-Rückhaltesystem, mit einem Bolzen (3), der drehfest mit einem Halteteil (1) verbunden ist, und einer darauf aufschraubbaren Mutter (7; 7'), wobei der Bolzen (3) und die Mutter (7; 7') ein Gewinde aufweisen, **dadurch gekennzeichnet, daß** eines der Gewinde ein selbstfurchendes Gewinde (5; 5') zum elastischen Verformen des Gewindes in dem Gegenstück aufweist, so daß die Mutter (7; 7') nach dem Aufschrauben gegen Verdrehen gesichert ist.

5. Befestigungsmittel nach einem der vorhergehenden Ansprüche, **dadurch gekennzeichnet, daß** die Mutter (7; 7') ein Stanzteil ist.

6. Befestigungsmittel nach einem der vorhergehenden Ansprüche, **dadurch gekennzeichnet, daß** die Mutter ein Spritzteil ist.

7. Befestigungsmittel nach einem der vorhergehenden Ansprüche, **dadurch gekennzeichnet, daß** die Mutter durch einen Kaltpreßvorgang geformt ist.

8. Fahrzeuginsassen-Rückhaltesystem, mit einem Gassack-Modul, das einen Gassack (15), einen Gasgenerator und ein Befestigungsmittel nach einem der vorhergehenden Ansprüche umfaßt, wobei das Befestigungsmittel das Halteteil (1) aufweist, welches am Gassack (15) angreift und zur Befestigung des Halteteils (1) und des Gassacks (15) am Gasgenerator dient.

9. Fahrzeuginsassen-Rückhaltesystem, mit einem Gassack-Modul, das einen Gassack (15), einen Gasgenerator mit einem Flansch (11) und ein Befestigungsmittel nach einem der Ansprüche 1-7 umfaßt, wobei das Befestigungsmittel den Flansch (11) aufweist und zur Befestigung des Flansches (11) und des Gassack-Moduls am Fahrzeug dient.

## Claims

1. A fastener means in a vehicle occupant restraint system equipped with a gas bag, comprising a stud (3) non-rotatably connected to a holder part (1) and a nut (7; 7') screwable thereon, **characterized in that** said nut (7; 7') comprises a self-tapping or thread-forming thread (5; 5') for tapping, forming or elastically deforming a thread in said stud (3) so that said nut (7; 7') after being screwed on is locked against rotation, said stud being threadless prior to screwing on said nut (7; 7').

2. The fastener means as set forth in claim 1, **characterized in that** said stud (3) is fixed to said holder part (1) by being pressed in or formed integrally therewith.

3. The fastener means as set forth in either of the preceding claims, **characterized in that** said stud (3) is fixed to an annular holder part (1) surrounding the inflation orifice of a gas bag.

4. A fastener means in a vehicle occupant restraint system equipped with a gas bag, comprising a stud (3) non-rotatably connected to a holder part (1) and a nut (7; 7') screwable thereon, said stud (3) and said nut (7; 7') including a thread, **characterized in that** one of the threads is a thread-forming thread (5; 5') for elastically deforming the thread in the counterpart so that said nut (7; 7') after being screwed on is locked against rotation.

5. The fastener means as set forth in any of the preceding claims, **characterized in that** said nut (7; 7') is a stamped part.

6. The fastener means as set forth in any of the preceding claims, **characterized in that** said nut is an injection molded part.

7. The fastener means as set forth in any of the preceding claims, **characterized in that** said nut is formed by a cold-press process.

8. A vehicle occupant restraint system, comprising a gas bag module including a gas bag (15), a gas generator and a fastener means as set forth in any of the preceding claims, said fastener means including said holder part (1) engaging said gas bag (15) and serving for attaching said holder part (1) and said gas bag (15) to said gas generator.

9. A vehicle occupant restraint system, comprising a gas bag module including a gas bag (15), a gas generator having a flange (11), and a fastener means as set forth in any of the claims 1-7, said fastener means including said flange (11) and serving for attaching said flange (11) and said gas bag module to the vehicle.

## Revendications

1. Moyen de fixation dans un système de retenue des occupants d'un véhicule équipé d'un coussin à gaz, comprenant un boulon (3) relié de manière solidaire en rotation à une pièce de retenue (1), et un écrou (7 ; 7') qui peut être vissé dessus, **caractérisé en ce que** l'écrou (7 ; 7') présente un filetage (5 ; 5') autotaraudant ou autorainurant pour tailler, former ou déformer élastiquement un filetage dans le boulon (3), de sorte qu'après le vissage, l'écrou (7 ; 7') est assuré vis-à-vis de la rotation, le boulon étant dépourvu de filetage avant le vissage de l'écrou (7 ; 7').

2. Moyen de fixation selon la revendication 1, **caractérisé en ce que** le boulon (3) est immobilisé par enfoncement ou par moulage sur la pièce de retenue (1).

3. Moyen de fixation selon l'une des revendications précédentes, **caractérisé en ce que** le boulon est immobilisé sur une pièce de retenue (1) annulaire entourant l'orifice de gonflage d'un coussin à gaz.

4. Moyen de fixation dans un système de retenue des occupants d'un véhicule équipé d'un coussin à gaz, comprenant un boulon (3) relié de manière solidaire en rotation à une pièce de retenue (1), et un écrou (7 ; 7') qui peut être vissé dessus, le boulon (3) et l'écrou (7 ; 7') présentant un filetage, **caractérisé en ce que** l'un des filetages présentant un filetage autorainurant (5 ; 5') pour déformer élastiquement le filetage dans la pièce complémentaire, de sorte qu'après le vissage, l'écrou (7 ; 7') est assuré vis-à-vis de la rotation.

5. Moyen de fixation selon l'une des revendications précédentes, **caractérisé en ce que** l'écrou (7 ; 7') est une pièce de découpage.

6. Moyen de fixation selon l'une des revendications précédentes, **caractérisé en ce que** l'écrou est une pièce moulée par injection.

7. Moyen de fixation selon l'une des revendications précédentes, **caractérisé en ce que** l'écrou est formé par une opération de pressage à froid.

8. Système de retenue des occupants d'un véhicule, comportant un module de coussin à gaz (15), un générateur de gaz et un moyen de fixation selon l'une des revendications précédentes, le moyen de fixation comportant la pièce de retenue (1) qui attaque le coussin à gaz (15) et sert à fixer la pièce de retenue (1) et le coussin à gaz (15) sur le générateur de gaz.

9. Système de retenue des occupants d'un véhicule, comportant un module de coussin à gaz (15), un générateur de gaz avec une bride (11) et un moyen de fixation selon l'une des revendications 1 à 7, le moyen de fixation comportant la bride (11) et servant à la fixation de la bride (11) et du module de coussin à gaz sur le véhicule.
